# FASCICULE DE BREVET EUROPEEN

(11) **EP 0 558 364 B1**
(45) Date de publication et mention de la délivrance du brevet: **30.10.1996**
(21) Numéro de dépôt: 93400294.0
(22) Date de dépôt: 05.02.1993
(51) Int. Cl.: G01P 3/44, G01D 5/14, G01D 5/16

(54) **Structure à aimants pour capteur de déplacement**
Magnetstruktur für einen Verschiebungssensor
Magnet structure for a displacement sensor

(30) Priorité: 28.02.1992 FR 9202341
(43) Date de publication de la demande: 01.09.1993
(73) Titulaire: S.N.R. ROULEMENTS, F-74010 Annecy Cédex (FR)
(72) Inventeur: Blache, Claire, F-74960 Meythet (FR)
(74) Mandataire: Ernst-Schonberg, Michel

(56) Documents cités:
- EP-A- 0 464 405
- DE-A- 2 403 854
- DE-B- 1 281 549
- FR-A- 2 155 303
- US-A- 4 315 214

## Description

La présente invention concerne des structures à aimants pour capteur de déplacement qui génèrent dans un entrefer un champ magnétique variant linéairement sur un axe de mesure.

On connaît des capteurs de déplacement à aimants constitués par un ou plusieurs aimants qui produisent une induction B et par un élément de mesure de l'induction (sonde de Hall, magnéto-résistance ...) animés d'un mouvement relatif. La résolution d'un tel capteur est proportionnelle à la sensibilité de l'élément de mesure de l'induction et au gradient de cette induction dans la plage de déplacement. Ce gradient dépend de la nature des aimants, de la forme du circuit magnétique et de sa position par rapport à l'élément de mesure.

Les dispositifs les plus courants sont constitués par un aimant fixé à l'organe dont la position doit être mesurée. Dans ce cas la masse de l'aimant doit être relativement faible pour ne pas perturber le mouvement de l'organe.

Lorsque la sonde est placée en face de l'aimant, la variation du champ magnétique en fonction du déplacement est importante et non linéaire. Le signal de la sonde doit alors être exploité après sa comparaison avec des signaux de référence. Ce type de dispositif permet par exemple des mesures de déplacement de l'ordre de 100 mm avec une précision de 0,1 mm pour un volume d'aimant Samarium-Cobalt de 400 mm³.

Lorsque la sonde est placée dans une zone où le champ varie linéairement et si J désigne l'axe de polarisation de l'aimant, on peut soit placer la sonde parallèlement à l'axe J et déplacer l'aimant sur cet axe, soit placer la sonde perpendiculairement à l'axe J. Le signal de la sonde est alors proportionnel au déplacement et le gradient d'induction dépend de la forme et de la nature de l'aimant, ainsi que de la distance de l'aimant à la sonde. Il est de l'ordre de 0,1 T/mm à 1 T/mm sur une distance de 0,1 à quelques millimètres.

Les dispositifs de mesure de déplacement qui font application de ces agencements de sondes et d'aimants sont sensibles à un environnement ferromagnétique.

La demande de brevet n° 91-01609 décrit un capteur de micro-déplacements avec des circuits magnétiques fournissant dans un entrefer une variation importante de l'induction sur une étendue de mesure variant de 100 à 500 µm environ.

La publication EP-A-0215454 décrit une structure constituée par un aimant permanent et par une culasse en forme de U associés pour réaliser un circuit magnétique fermé. La position du capteur le long de la culasse est déterminée en fonction de l'intensité du champ de fuite détecté par le capteur et la forme de la culasse peut être ajustée pour obtenir une variation linéaire du champ.

L'invention a pour objet un circuit magnétique qui génère dans une entrefer un profil de champ triangulaire et qui est adapté à une mesure de déplacement pouvant atteindre 1 à 2 mm. De plus, comme la zone linéaire du déplacement est plus importante, on peut alors utiliser un dispositif de mesure dans lequel la taille de l'élément sensible est plus importante, pour augmenter la sensibilité du capteur. Les culasses de retour de flux permettent au flux magnétique d'être confiné à l'intérieur d'une structure.

L'invention a donc pour objet une structure magnétique constituée par deux circuits magnétiques ouverts identiques placés de part et d'autre d'un entrefer dont chacun est constitué par des aimants permanents juxtaposés rigidement liés par une culasse de retour de flux comme dans FR-A-2 155 303 et dans lesquels les directions d'aimantation de deux aimants accolés sont opposées et perpendiculaires à la face en contact avec la culasse de retour de flux et à la face en contact avec l'entrefer dans le but de réaliser une face en contact avec l'entrefer présentant une suite alternée de pôles Nord et Sud.

Selon une autre caractéristique de l'invention les deux circuits magnétiques ouverts sont placés de part et d'autre de l'entrefer de telle sorte que les pôles des aimants en vis-à-vis soient identiques. Les deux circuits magnétiques ouverts sont alors en répulsion. Ce type de structure génère sur un axe de mesure un champ d'induction magnétique B caractérisé par une composante normale B_{y} nulle et une composante tangentielle Bₓ périodique. La variation de Bₓ est alors fonction du rapport longueur d'aimant (L)/largeur de l'entrefer (d) et on obtient une variation approximativement triangulaire pour un rapport L/d sensiblement égal à 2. Une telle variation est caractérisé par une pente élevée et une plage de variation linéaire importante.

Selon une autre caractéristique de la présente invention, les aimants et les culasses de retour de flux du circuit magnétique ont la forme d'anneaux coaxiaux, la largeur de l'entrefer et les polarisations des aimants étant soit axiales, soit radiales. Cette disposition permet la construction de capteurs linéaires de déplacement axial (entrefer radial) ou radial (entrefer axial), entre deux des éléments d'un ensemble tournant, tel qu'un roulement à billes.

D'autres caractéristiques et avantages de l'invention ressortiront d'une manière plus précise de la description ci-après, donnée à titre d'exemple non limitatif en référence aux dessins annexes, dans lesquels :
- la figure 1 est une coupe transversale d'un exemple de réalisation plus général de la structure conforme à l'invention,
- la figure 2 représente la courbe de variation du champ d'induction magnétique dans l'entrefer de la structure représentée à la figure 1,
- les figures 3 et 5 sont des coupes transversales de deux capteurs de déplacement en application de la structure représentée à la figure 1,
- les figures 4 et 6 représentent les variations du champ d'induction magnétique dans l'entrefer des capteurs représentés aux figures 3 et 5,
- la figure 7 est une coupe transversale d'un exemple de réalisation général d'une structure à aimants prismatiques,
- les figures 8 et 9 sont des coupes transversales de deux capteurs de déplacement en application de la structure représentée à la figure 7,
- les figures 10 et 11 sont des variantes de réalisation de capteurs illustrés par les figures 8 et 9,
- les figures 12 et 14 sont des vues perspectives avec coupe diamétrale de deux circuits magnétiques en forme d'anneaux à polarisation axiale,
- les figures 13 et 15 sont des vues perspectives avec coupe diamétrale de deux circuits magnétiques en forme d'anneaux à polarisation radiale,
- les figures 16 à 19 sont des sections de roulements à billes équipés de variantes de réalisation de capteurs de déplacement à sensibilité axiale et radiale respectivement.

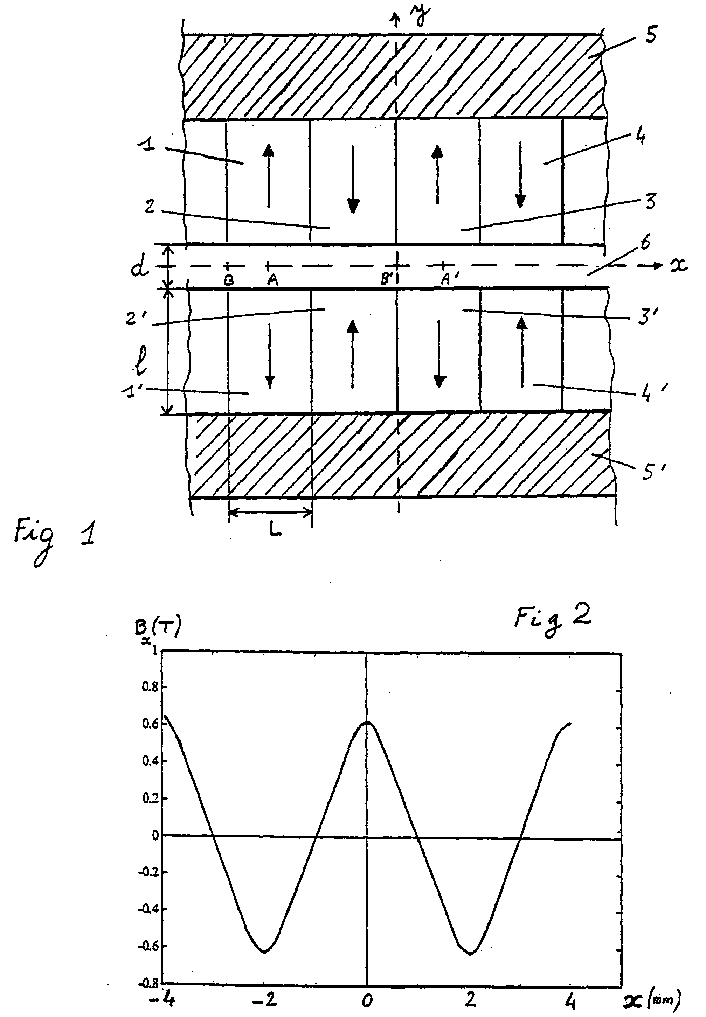

Selon la figure 1 deux circuits magnétiques ouverts, rectangulaires sont séparés par un entrefer 6 de largeur d.

Chaque circuit magnétique est constitué par une suite d'aimants permanents 1, 2, 3, 4 et 1', 2', 3', 4', de section rectangulaire rigidement reliés par une culasse de retour de flux 5 et 5'. La direction d'aimantation de chaque aimant est perpendiculaire à la face en contact avec la culasse de retour de flux et à la face tournée vers l'entrefer. Les directions d'aimantation de deux aimants accolés 1-2, 2-3, 3-4 et 1'-2', 2'-3', 3'-4' sont anti-parallèles. Les directions d'aimantation de deux aimants opposés 1-1', 2-2', 3-3', 4-4' séparés par l'entrefer sont également anti-parallèles. Les polarités (Nord ou Sud) en vis-à-vis des aimants opposés sont identiques et ces aimants sont en répulsion. Des moyens accessoires non représentés assurent l'écartement des deux circuits. Les aimants 1, 2, 3, 4 et 1', 2', 3', 4' sont des aimants durs, de perméabilité relative voisine de 1, telle qu'une céramique de Nd-Fe-B. Les culasses 5-5' sont en matériau ferromagnétique doux, à haute perméabilité, tel que le fer pur. La structure génère dans l'entrefer sur l'axe de mesure (Ox) un champ d'induction magnétique caractérisé par une composante normale B_{y} nulle et une composante tangentielle Bₓ périodique. La variation de cette composante tangentielle est illustrée par un profil triangulaire lorsque le rapport longueur d'aimant (L) : largeur de l'entrefer (d) est sensiblement égal à 2. Ce profil est représenté sur la figure 2. Il est caractérisé par une pente p qui obéit à la relation empirique p = C.J/d dans laquelle C = 0.7; J est la rémanence du matériau et d est la largeur de l'entrefer. Avec des aimants à haute énergie (J = 12 000 Gauss) et un entrefer de petite dimension (d = 1 mm), on a une pente p égale à 8,4 Gauss/µm. La plage de mesure de déplacement linéaire représente 70 % de la longueur d'aimant (L). Pour une longueur d'aimant L = 2 mm et un entrefer d = 1 mm, la plage linéaire est sensiblement égale à 1,4 mm. Ces résultats sont obtenus pour des aimants dont l'épaisseur (1) est supérieure ou égale à la longueur (L).

Pour réaliser un capteur linéaire de déplacement, on s'intéresse à une ou plusieurs des parties linéaires de ce profil triangulaire et donc à une ou plusieurs périodes de la structure de la figure 1. On place ensuite dans l'entrefer un ou plusieurs dispositifs de mesure de la composante Bₓ en fonction du nombre de périodes du circuit magnétique sélectionné.

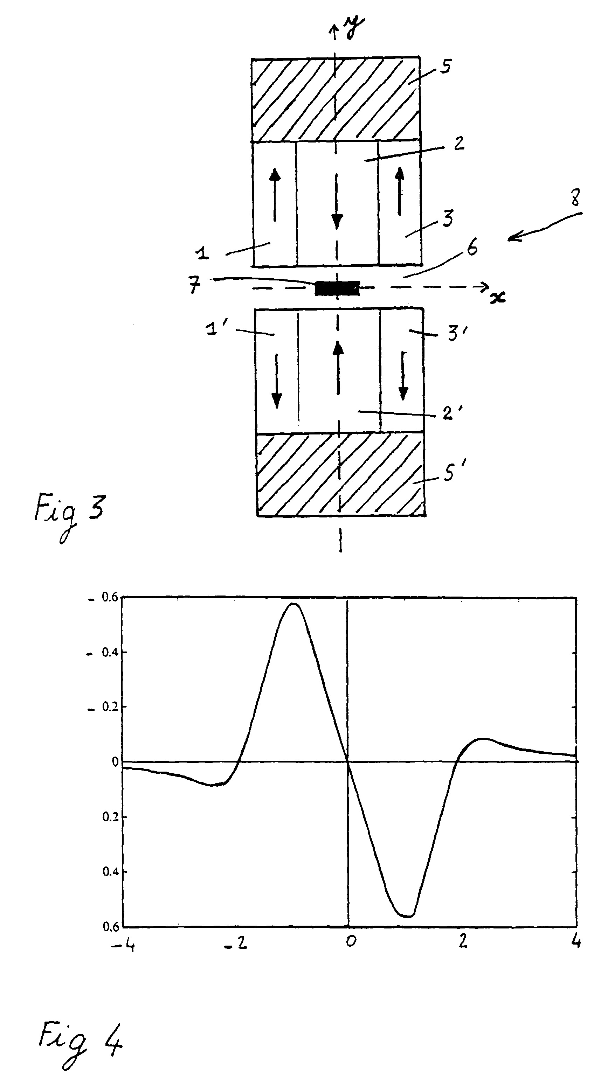

La figure 3 représente la coupe transversale d'un capteur 8 qui montre un circuit magnétique constitué par deux groupes de trois aimants 1-2-3, 1'-2'-3', associés à deux culasses de retour de flux 5-5' et placés de part et d'autre d'un entrefer 6. Le circuit s'étend sur une période AA'de la figure 1. Les aimants latéraux 1-3 et 1'-3' ont alors suivant la direction de déplacement une longueur au moins égale à la moitié de la longueur des aimants accolés centraux 2 et 2'. Un dispositif de mesure 7 est placé au centre de l'entrefer 6 à égale distance des aimants 2 et 2'(selon l'axe y) et au centre des aimants 2 et 2' (selon l'axe x). Le dispositif 7 peut être une sonde à effet Hall placée perpendiculairement à la composante tangentielle du champ d'induction magnétique Bₓ, ou un dispositif magnéto-résistif placé parallèlement à cette même composante.

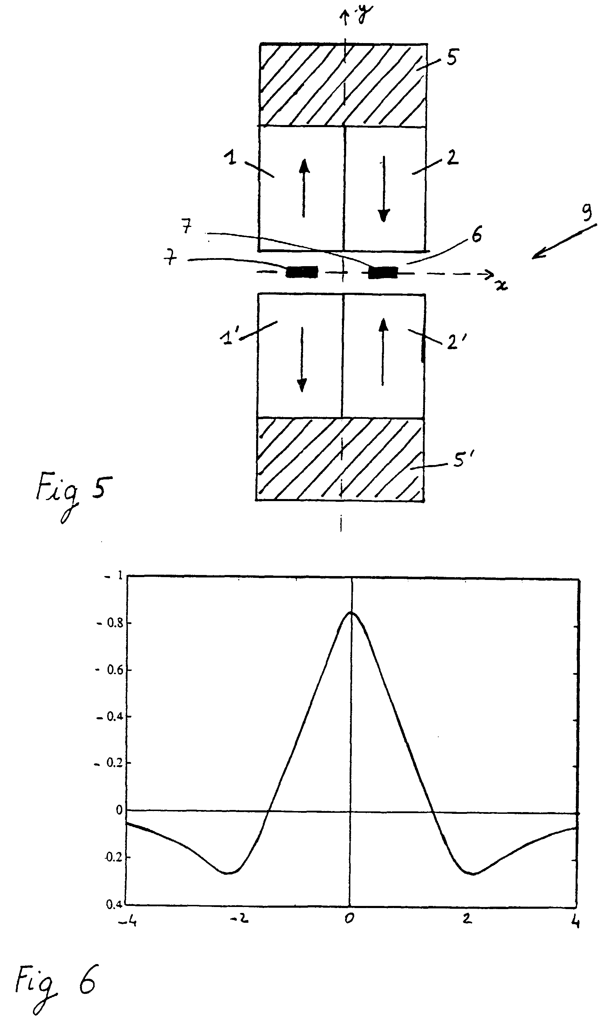

La figure 4 représente le profil de variation de la composante tangentielle du champ d'induction magnétique Bₓ. La composante normale B_{y} est nulle. Le profil est identique au profil dans la periode AA' du circuit représenté sur la figure 1 en la partie centrale linéaire. On peut construire un autre dispositif capteur 8 en choisissant des aimants tels que 2, 3, 4 et 2', 3', 4' en lieu et place des aimants 1, 2, 3 et 1', 2', 3'. La variation Bₓ de l'induction sera alors opposée à celle de la figure 4.

La figure 5 représente une vue en coupe transversale d'un capteur 9 à circuits magnétiques constitués par deux groupes de deux aimants 1-2, 1'-2' associés à deux culasses de retour de flux 5-5' et placés de part et d'autre d'un entrefer 6 avec une périodicité telle que BB' de la figure 1. Deux dispositifs de mesure 7 sont placés dans l'entrefer à égale distance des aimants 1-1' et 2-2' (selon l'axe Oy) et approximativement à mi-distance des faces latérales des aimants 1-1' et 2-2' (selon l'axe Ox) suivant deux axes de coordonnées Ox, Oy perpendiculaires.

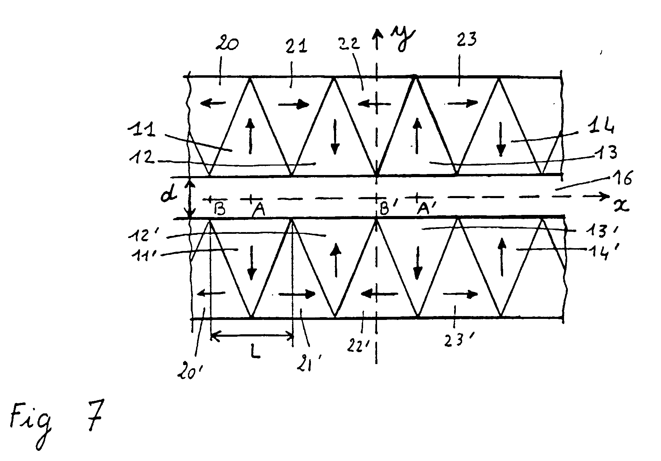

La figure 6 représente le profil de variation de la composante tangentielle du champ d'induction magnétique Bₓ. La composante normale B_{y} est nulle. Le profil est identique au centre à celui de la periode BB' du dispositif représenté sur là figure 1. Les parties latérales du profil sont amorties par "l'effet de bord ". Dans un dispositif équivalent les aimants 23 et 2'-3'remplacent les aimants 1-2 et 1'-2'. Le profil de la figure 6 sera alors inversé par rapport à l'axe Ox. La sensibilité du capteur de position de la figure 5 est le double de celle du capteur 8 représente à la figure 3. Par l'emploi de deux dispositifs de mesure 7 on réduit les conséquences des variations thermiques sur les circuits.

La figure 7 est une coupe transversale d'une variante de réalisation de la structure. Deux circuits magnétiques ouverts sont placés de part et d'autre d'un entrefer 16. Chacun des circuits magnétiques est constitué par une suite d'aimants permanents principaux 11-12-13-14, 11'-12'-13'-14' de section triangulaire. Ces aimants sont rigidement liés les uns aux autres par des aimants secondaires 20-21-22-23, 20'-21'-22'-23' de section triangulaire. La section triangulaire de chaque aimant (principal et secondaire) est identique. Le contour de la section est un triangle isocèle dont les angles égaux ont sensiblement pour valeur 67,5°. Pour chacun des aimants principaux (11-12-13-14, 11'-12'-13'-14'), la direction d'aimantation est perpendiculaire à la base (tournée vers l'entrefer). Les directions d'aimantation de deux aimants principaux successifs (11-12, 12-13, 13-14, 11'-12', 12'-13', 13'-14') sont anti-parallèles ; les directions d'aimantation de deux aimants principaux en vis-à-vis (11-11', 12-12', 13-13', 14-14') sont également anti-parallèles. Les pôles (nord ou sud) en vis-à--vis sont identiques, les aimants opposés deux à deux sont donc en répulsion. Pour chacun des aimants secondaires (20-21-22-23, 20'-21'-22'-23'), la direction d'aimantation est parallèle à la base de leur section et en continuité de flux avec celui des aimants principaux.

Cette structure génère dans l'entrefer 16, sur l'axe de mesure (Ox) un champ d'induction magnétique caractérisé par une composante normale B_{y} nulle et une composante tangentielle Bₓ périodique. Le profil de la variation de cette composante est identique à celui de la figure 2 lorsque le rapport de la longueur (L) de base d'aimant et de la largeur (d) de l'entrefer est approximativement égal à 2. La pente obéit à la même relation empirique p = C.J/d mais avec un coefficient C égal à 0,9. Avec des aimants à haute énergie (J = 12000 Gauss) et un entrefer de petite dimension (d = 1 mm), on a une pente p égale à 10,8 Gauss/µm. Cette pente est supérieure de 20 % environ à celle obtenue avec le dispositif de la figure 1 et la longueur de la plage linéaire n'est pas modifiée. Ce résultat amélioré est la conséquence de la présence des aimants secondaires (20-21-22-23, 20'-21'-22'-23') en lieu et place des culasses de retour de flux (5-5'), qui agissent comme des concentrateurs de flux. Cet effet concentrateur de flux est maximum pour un angle de 67,5°.

Lorsque cet angle est par exemple réduit à 45°, les fuites de flux sur les bases des aimants sont minimales, mais l'effet concentrateur de flux est moins important.

Les éléments de la structure précitée permettent de réaliser un capteur de déplacement. On place dans ce cas dans l'entrefer un ou plusieurs dispositifs de mesure de la composante tangentielle du champ d'induction magnétique en fonction du nombre de périodes sélectionnées.

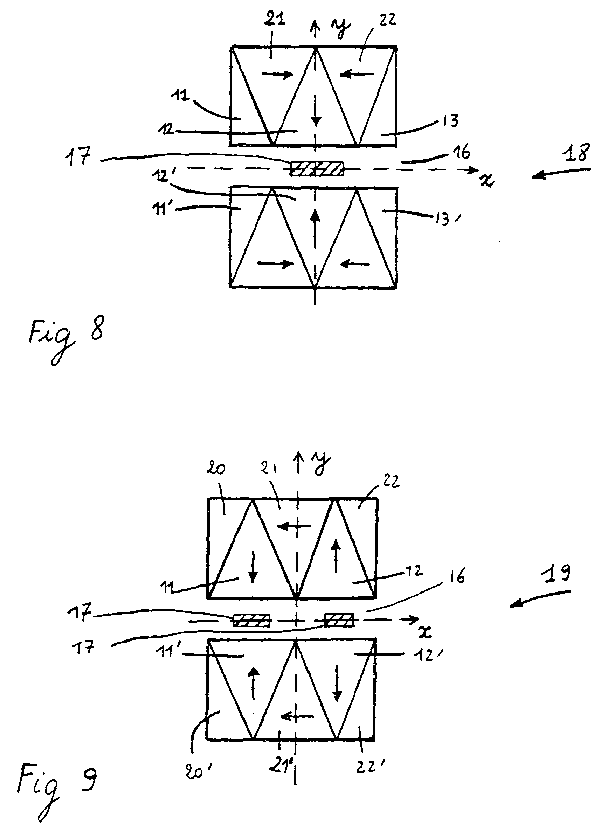

Selon la figure 8, la coupe transversale du capteur 18 montre un circuit magnétique constitué par deux groupes de cinq aimants (11-12-13, 21-22 et 11'-12'-13', 21'-22') placés de part et d'autre de l'entrefer 16 sur l'étendue d'une période AA' du dispositif représenté sur la figure 7. Les aimants latéraux 11-13 et 11'-13' fractionnés ont une base de longueur réduite à la moitié de celle des aimants centraux 12 et 12'. Le dispositif de mesure 17 est placé au centre de l'entrefer 16 à égale distance des aimants 12 et 12' (selon l'axe Oy) et au centre des aimants 12 et 12' (selon l'axe Ox). Il s'agit soit d'un dispositif à effet Hall placé perpendiculairement à la composante tangentielle du champ d'induction magnétique Bₓ, soit d'un dispositif magnétorésistif placé parallèlement à cette même composante.

Le profil de la variation de la composant Bₓ est identique à celui du profil de la période AA' du dispositif représenté sur la figure 7. On peut également construire un autre dispositif en choisissant les aimants 21-22 et 21'-22' en lieu et place des aimants 11-12-13, 11'-12'-13' comme indiqué à la figure 9.

La sensibilité du capteur 18 est le produit de la sensibilité du dispositif de mesure et de la pente du champ d'induction magnétique (p = 0,9 J/d). L'étendue de mesure correspondant alors à ± 0,7.d.

Selon la figure 9, la coupe transversale du capteur 19 montre un circuit magnétique composé de deux groupes de cinq aimants (11-12, 20-21-22 et 11'-12', 20'-21'22') placés de part et d'autre de l'entrefer 16. Il s'agit d'une periode BB' du dispositif représenté sur la figure 7. Les aimants latéraux 20-22 et 20'-22' ont une base égale à la moitié de celles des aimants centraux 21 et 21'. Deux dispositifs de mesure 17 sont placés au centre de l'entrefer 16 à égale distance des aimants principaux opposés 11-11' et 12-12' (selon l'axe Oy) et approximativement au centre des aimants 11-11' et 12-12' (selon l'axe Ox).

Le profil de la variation de la composante Bₓ d'induction est identique à celui du profil d'induction de la période BB' du dispositif représenté sur la figure 7 mais diffère légèrement dans les parties latérales à cause des effets de bord. On peut également construire selon la figure 9 un dispositif équivalent avec les aimants 12-13, 21-22-23 et 12'-13', 21'-22'-23' de la figure 7 en lieu et place des aimants 11-12, 20-21-22 et 11'-12', 20'-21'22'. Le profil d'induction en référence à la figure 9 sera alors opposé de celui de la figure 8. La sensibilité du capteur de position 19 à deux dispositifs de mesure 17 est alors le double de celle du capteur 18 à un dispositif de mesure 17.

Les capteurs 18 et 19 sont constitués avec des circuits magnétiques sans culasse de retour de flux à partir d'aimants permanents durs (µr = 1). On peut réaliser d'autres circuits magnétiques dérivés par modification sucessives des directions de polarisation à 90°.

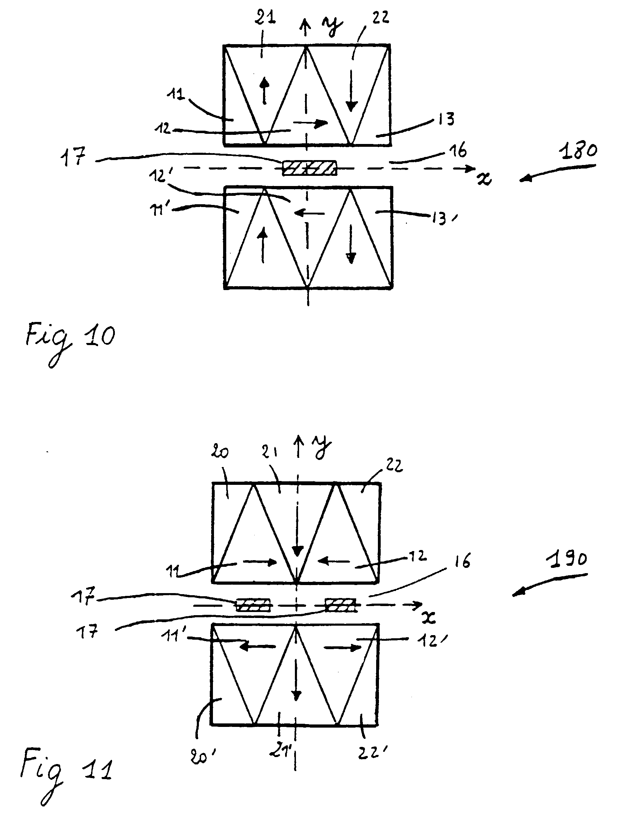

La figure 10 représente ainsi un capteur 180 dérivé du capteur 18 dans lequel les directions de polarisation sont déviées de + 90° dans le même sens. Le champ magnétique dans l'entrefer 16 a tourné de - 90°. Si les dimensions des aimants sont identiques, la composante normale de l'induction B_{y} générée par le circuit magnétique du capteur 180 est égale à la composante tangentielle de l'induction Bₓ généré par le circuit magnétique du capteur 18, sur l'axe de mesure Ox. On utilisera donc préférentiellement une sonde à effet Hall dans le capteur 180 et une magnétorésistance dans le capteur 18.

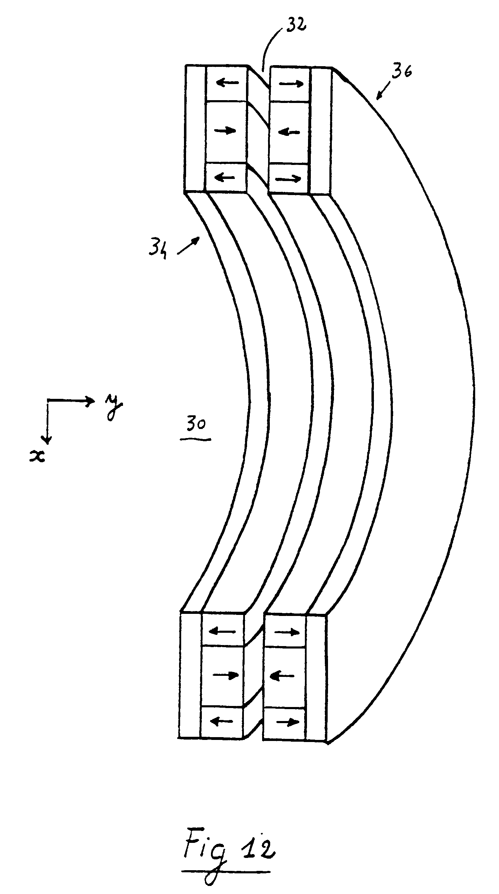

La figure 11 représente un capteur 190 dérivé du capteur 19. La géométrie du circuit magnétique du capteur 190 est identique à celle du circuit magnétique du capteur 19. Les directions de polarisation ont tourné de + 90° tandis que le champ magnétique dans l'entrefer a tourné de - 90°. Pour des dimensions identiques, la composante normale de l'induction B_{y} générée par le circuit magnétique du capteur 190 est égale à la composante tangentielle de l'induction Bₓ générée par le circuit magnétique du capteur 19, sur l'axe de mesure Ox. On utilisera donc préférentiellement une sonde à effet Hall avec élément sensible dans le cas du capteur 190 et une magnétorésistance dans le cas du capteur 19.

La figure 12 représente la vue perspective avec coupe diamétrale d'une structure magnétique annulaire symétrique 30 à entrefer axial 32. Il comprend deux circuits 34-36 à trois aimants en forme d'anneau liés par une culasse en forme de couronne. Leurs sections transversales sont représentées à la figure 3.

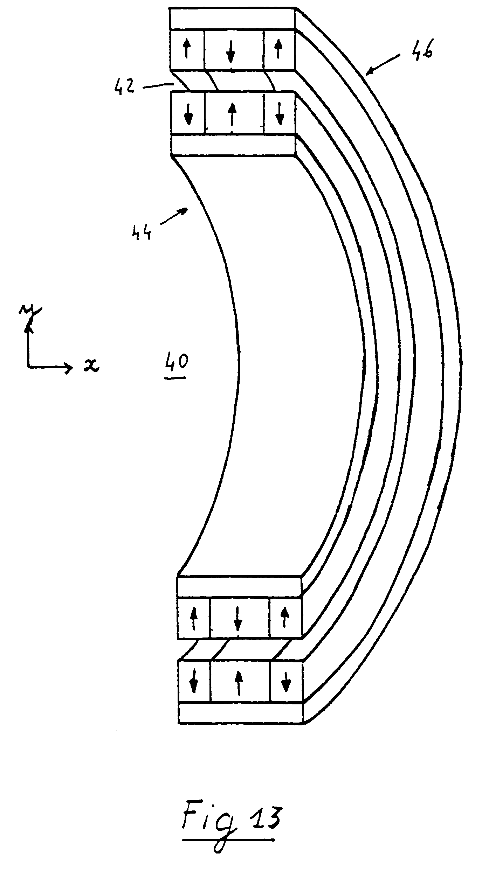

La figure 13 représente la vue perspective avec coupe diamétrale d'une variante de structure magnétique annulaire symétrique 40 à entrefer radial 42. Il comprend deux circuits 44-46 de trois aimants en forme d'anneau liés par une culasse cylindrique, leurs sections transversales sont représentées à la figure 3.

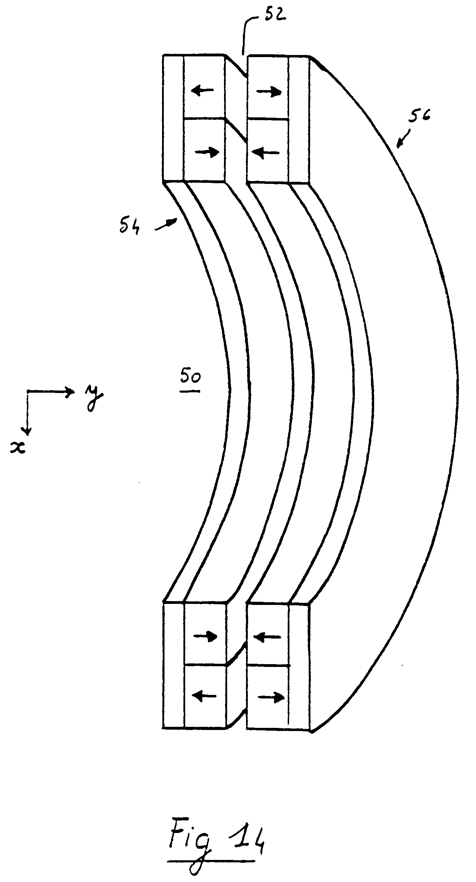

La figure 14 représente la vue perspective avec coupe diamétrale d'un circuit magnétique annulaire symétrique 50 à entrefer axial 52. Il comprend deux circuits 54-56 à deux aimants en forme d'anneau liés par une culasse en forme de couronne. Leurs sections transversales sont représentées à la figure 5.

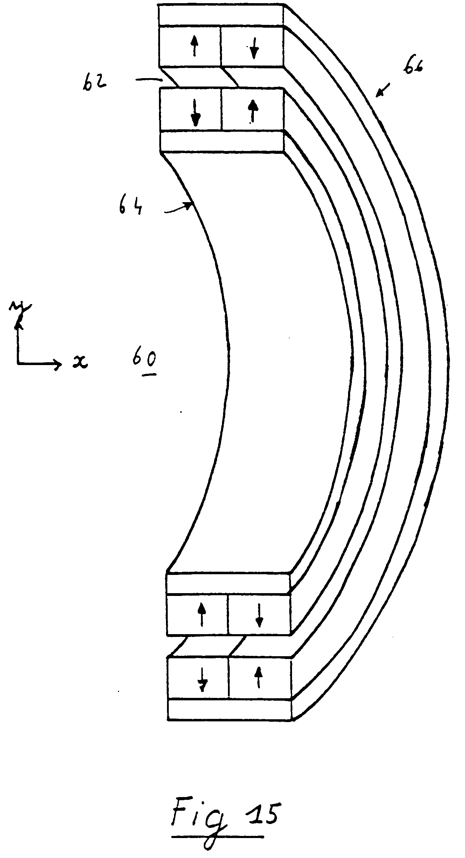

La figure 15 représente une variante de circuit magnétique annulaire symétrique 60 à entrefer radial 62. Il comprend deux circuits 64-66 à deux aimants en forme d'anneaux liés par une culasse cylindrique dont la section est représentée à la figure 5.

La figure 16 représente la coupe transversale d'un roulement à billes 70 pourvu d'un capteur linéaire 72 de faibles déplacements axiaux. Le roulement à billes 70 possède une bague intérieure 74 destinée à être montée sur un arbre tournant, une cage annulaire 78 emprisonnant chacune des billes 80 du roulement et une bague extérieure 82 solidaire d'un support fixe non représenté. Sur la bague intérieure 74 est fixé par collage un circuit magnétique annulaire tel que décrit en référence à la figure 13. Les anneaux magnétiques intérieurs sont directement collés sur la bague intérieure 74, réalisée en un acier à haute perméabilité magnétique. Les deux circuits sont rigidement liés l'un à l'autre par une couronne 88 également réalisée en matériau amagnétique, de manière à délimiter un entrefer annulaire 90 radial. Sur la bague extérieure 82 du roulement à billes 70 est fixé le support 92 d'une sonde de mesure 94 disposée entre les anneaux au milieu de l'entrefer 90. La section radiale du support 92 à la forme d'un F dont la branche inférieure porte la sonde 94.

La sonde de mesure 94 est raccordée par un câble de liaison 96 à un circuit de traitement non représenté. Grâce au gradient magnétique élevé engendré dans l'entrefer annulaire 90, au cours de la rotation de la bague 74, la sonde de mesure 94 engendre un signal analogique relativement important représentatif des faibles déplacements axiaux relatifs (de 10 à 100 micromètres d'amplitude) des bagues 74 et 82. De tels déplacements sont par exemple la conséquence des déformations élastiques que subissent les bagues 74-82 et les billes 80, sous l'action d'efforts axiaux appliqués à l'arbre ou au support de la bague extérieure 82 du roulement.

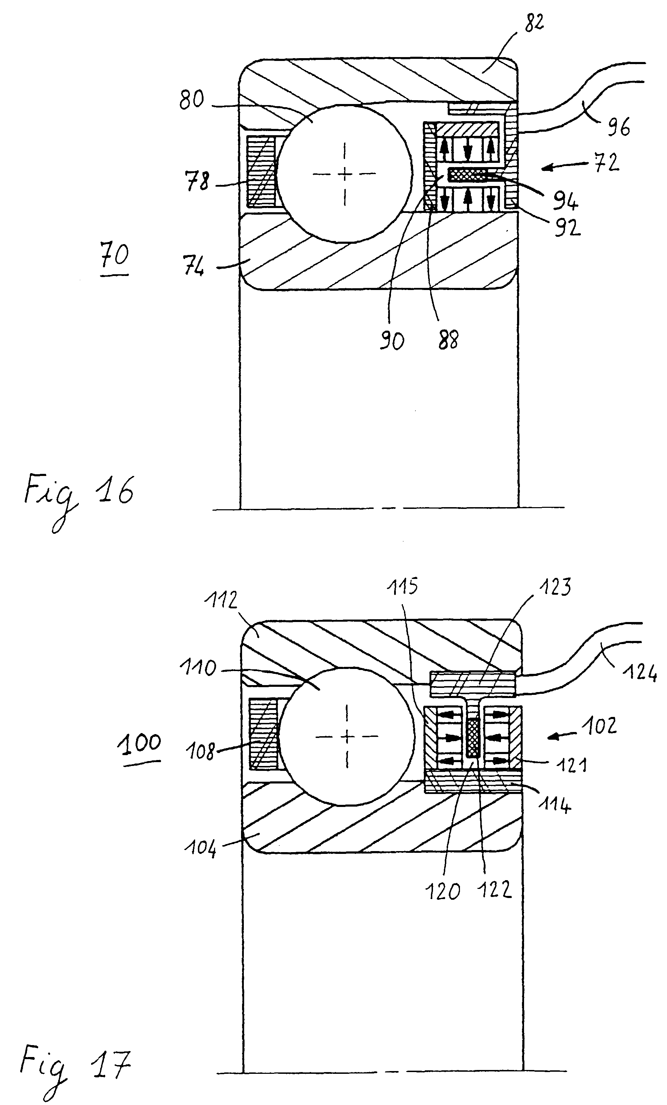

La figure 17 représente la coupe transversale d'un roulement à billes 100 pourvu d'un capteur linéaire 102 de faibles déplacements radiaux. Le roulement 100 possède une bague intérieure 104 montée fixe sur un arbre tournant, une cage annulaire 108 emprisonnant chacune des billes 110 du roulement et une bague extérieure 112 solidaire d'un support fixe non représenté. Sur la bague intérieure 104 est fixée par collage une couronne intercalaire 114 en matériau amagnétique sur laquelle sont fixés par collage deux empilages de trois anneaux aimantés, à polarisation axiale, respectivement fixés à deux culasses en forme de couronne circulaire 115 et 121 semblables à celles de la figure 12, et séparés par un entrefer axial 120. Sur la bague extérieure 112 du roulement 100 est monté fixe le support en T 123 d'une sonde de mesure 122 disposée entre les anneaux et au milieu de l'entrefer 120. La sonde de mesure 122 est raccordée par un câble de liaison 124 à un circuit de traitement non représenté.

Lorsque l'arbre tourne, la sonde de mesure 122 engendre un signal analogique relativement important représentatif des faibles déplacements radiaux relatifs (de 10 à 100 micromètres d'amplitude) des bagues 104 et 112 du roulement 110, qui résultent des efforts radiaux appliqués à l'arbre, et/ou au support (non représenté) de la bague extérieure 112 du roulement.

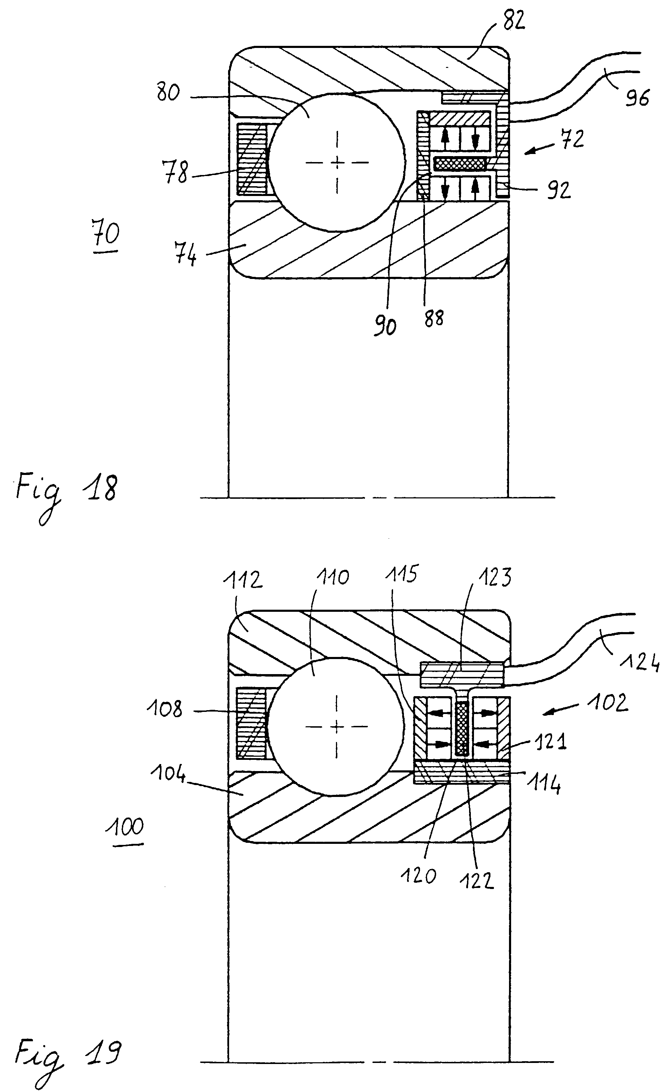

La figure 18 représente la coupe transversale d'un roulement à billes 70 pourvu d'un capteur linéaire 72 de faibles déplacements axiaux. Le roulement 70 possède une bague intérieure 74 montée fixe sur un arbre tournant, une cage annulaire 78 emprisonnant chacune des billes 80 du roulement et une bague extérieure 82 solidaire d'un support fixe non représenté. Sur la bague intérieure 74 est fixé par collage un circuit magnétique annulaire symétrique à polarisations radiales, semblable à celui représenté à la figure 15 et comprenant un double anneau magnétique intérieur et un double anneau magnétique extérieur. Par rapport à la section du circuit magnétique de la figure 15, on remarquera cependant que l'anneau magnétique intérieur ne possède pas de culasse de retour de flux. Cet élément est remplacé par la bague intérieure 74 du roulement 70, réalisée en un acier à haute perméabilité magnétique.

Les anneaux magnétique sont rigidement liés l'un à l'autre par une couronne 88 réalisée en matériau amagnétique de manière à délimiter un entrefer annulaire radial 90. Sur la bague extérieure 82 du roulement à billes 70 est monté fixe le support 92 de deux sondes de mesure disposées entre les anneaux aimantés et au milieu de l'entrefer 90. La section du support 92 à la forme d'un F. Les sondes de mesure sont raccordées par un câble de liaison 96 à un circuit de traitement non représenté. Grâce aux gradients magnétiques élevés engendrés dans l'entrefer annulaire 90 au cours de la rotation de l'arbre, l'ensemble des deux sondes de mesure engendre un signal analogique relativement important représentatif des faibles déplacements axiaux relatifs (de 10 à 100 micro-mètres d'amplitude) des bagues 74 et 82 du roulement 70. De tels déplacements sont la conséquence des déformations élastiques que subissent les bagues 74-82 et les billes 80, sous l'action d'efforts axiaux appliqués à l'arbre et/ou au support (non représenté) de la bague extérieure 82 du roulement.

La figure 19 représente la coupe transversale d'un roulement à billes 100 à capteur linéaire 102 de faibles déplacements radiaux. Le roulement 100 possède une bague intérieure 104 montée fixe sur un arbre tournant, une cage annulaire 108 emprisonnant chacune des billes 110 du roulement et une bague extérieure 112 solidaire d'un support fixe non représenté.

Sur la bague 104 est fixée par collage une couronne intercalaire 114 totalement amagnétique sur laquelle sont fixées par collage deux paires d'anneaux aimantés à polarisations axiales, respectivement fixées à deux culasses en couronne 115 et 121, semblables aux paires d'anneaux 54 et 56 de la figure 14, et séparées par un entrefer axial 120. Sur la bague extérieure 112 du roulement 100 est monté fixe le support 123 en T, de deux sondes de mesure 122 disposées entre les paires d'anneaux au milieu de l'entrefer 120. Les sondes de mesure sont raccordées par un câble de liaison 124 à un circuit de traitement non représenté. Grâce à la grande sensibilité de cette disposition, l'arbre étant tournant, l'ensemble des deux sondes de mesure engendre un signal analogique relativement important, représentatif des faibles déplacements radiaux relatifs (de 10 à 100 micromètres d'amplitude) des bagues 104 et 112 du roulement 110, qui résultent des efforts radiaux appliqués à l'arbre 106 et/ou au support (non représenté) de la bague extérieure 112 du roulement.

## Revendications

1. Structure à aimants pour capteur linéaire de déplacement constituée par deux circuits magnétiques séparés par un entrefer (6) respectivement constitués par une suite d'aimants permanents (1, 2, 3, 4 - 1', 2', 3', 4') accolés et rigidement assemblés par des culasses de retour de flux dont une face est tournée vers l'entrefer (6), caractérisée par le fait que les directions d'aimantation des aimants opposés (1, 1'-2, 2'-3, 3'-4, 4') et accolés (1-2, 2-3, 3-4 et 1'-2', 2'-3', 3'-4') sont anti-parallèles et que la longueur L de chaque aimant est approximativement deux fois supérieure à la largeur (d) de l'entrefer.

2. Structure selon la revendication 1, caractérisée par le fait que chaque circuit d'aimant permanents (1, 2, 3 - 1', 2', 3') est répétée périodiquement suivant la direction de déplacement et porte au moins un dispositif de mesure (7) placé au centre de l'entrefer à égale distance des aimants (1,1' - 2,2' - 3,3') suivant l'axe de coordonnées Oy.

3. Structure selon la revendication 2, caractérisée par le fait que la largeur d'un aimant latéral (1, 1' - 3, 3') est sensiblement égale à la moitié de la largeur d'un aimant accolé (2, 2').

4. Structure à aimants pour capteur linéaire de déplacement constitué par deux circuits magnétiques séparés par un entrefer (16) respectivement constitués par une suite d'aimants permanents principaux (11, 12, 13, 14 - 11', 12', 13', 14') de même section rigidement assemblés par des aimants secondaires (20, 21, 22, 23 - 20', 21', 22', 23') de section identique à celle des aimants principaux, caractérisée par le fait que :
- la section des aimants principaux est un triangle isocèle dont la base est tournée vers l'entrefer (16),
- les directions d'aimantation des aimants principaux opposés (11, 11' - 12, 12' - 13, 13' - 14, 14') et des aimants principaux successifs (11, 12 - 12, 13 - 13, 14 ; 11', 12'- 12', 13'- 13', 14') sont anti-parallèles,
- les polarités des aimants (11, 11'- 12, 12'- 13, 13'- 14, 14') opposés deux à deux sont identiques,
- la direction d'aimantation des aimants secondaires (20, 21, 22, 23 20', 21', 22', 23') est parallèle à la base de leur section et en continuité de flux avec celui des aimants principaux,
- la longueur L de la base de chaque aimant est approximativement deux fois supérieure à la largeur d de l'entrefer.

5. Structure à aimant selon la revendication 4, à répartition périodique des aimants principaux (11, 12 - 11, 12, 13 . 11', 12'- 11', 12'13') et des aimants secondaires (20, 21, 22 - 21, 22 ; 20', 21', 22'- 21', 22'), caractérisée par le fait que les directions de polarisation de chaque aimant principal et secondaire sont déviées de 90° dans le même sens.

6. Structure selon l'une quelconque des revendications 4 ou 5, caractérisée par le fait que la structure est répétée périodiquement suivant la direction du déplacement et porte au moins un dispositif de mesure (17) placé au centre de l'entrefer (16) et à égale distance des aimants principaux opposés (11, 11'- 12, 12'- 13, 13').

7. Structure selon l'une quelconque des revendications 1 à 6, caractérisée en ce qu'elle est solidaire d'une bague (74, 104) et délimite un entrefer annulaire (90, 120) dans lequel est disposée au moins une sonde de mesure (94, 122) solidaire d'un support (92, 123) monté sur une autre bague (82, 112).

## Claims

1. A structure with magnets for a linear displacement sensor formed by two magnetic circuits which are separated by an air gap (6) and respectively constituted by a series of permanent magnets (1, 2, 3, 4 - 1', 2', 3', 4') which are side-by-side and rigidly assembled by flux return yokes of which a face is towards the air gap (6), characterised in that the magnetisation directions of the magnets which are opposite (1, 1' - 2, 2' - 3, 3' - 4, 4') and side-by-side (1-2, 2-3, 3-4 and 1'-2', 2'-3', 3 '-4') are anti-parallel and that the length L of each magnet is approximately twice greater than the width (d) of the air gap.

2. A structure according to claim 1 characterised in that each circuit of permanent magnets (1, 2, 3 - 1', 2', 3') is repeated periodically in the direction of displacement and carries at least one measuring device (7) disposed at the centre of the air gap at an equal distance from the magnets (1, 1' - 2, 2' - 3, 3') along the co-ordinates axis Oy.

3. A structure according to claim 2 characterised in that the width of a lateral magnet (1, 1' - 3, 3') is substantially equal to half the width of a magnet (2, 2') disposed at the side.

4. A structure with magnets for a linear displacement sensor formed by two magnetic circuits which are separated by an air gap (16) and which are respectively constituted by a series of main permanent magnets (11, 12, 13, 14 - 11', 12', 13', 14') of the same section rigidly assembled by secondary magnets (20, 21, 22, 23 - 20', 21', 22', 23') of section identical to that of the main magnets, characterised in that:
- the section of the main magnets is an isosceles triangle of which the base is towards the air gap (16),
- the magnetisation directions of the opposite main magnets (11, 11' - 12, 12' - 13, 13', - 14, 14') and the successive main magnets (11, 12 - 12, 13 - 13, 14; 11', 12' - 12', 13' - 13', 14') are anti-parallel,
- the polarities of the magnets (11, 11' - 12, 12' - 13, 13' - 14, 14') which are opposite in twos are identical,
- the magnetisation direction of the secondary magnets (20, 21, 22, 23, 20', 21', 22', 23') is parallel to the base of their section and in a condition of flux continuity with that of the main magnets, and
- the length L of the base of each magnet is approximately twice greater than the width d of the air gap.

5. A structure with magnet according to claim 4 with periodic distribution of the main magnets (11, 12 - 11, 12, 13, 11', 12' - 11', 12', 13') and the secondary magnets (20, 21, 22 - 21, 22; 20', 21', 22' - 21', 22') characterised in that the directions of polarisation of each main and secondary magnet are deflected through 90° in the same direction.

6. A structure according to either one of claims 4 and 5 characterised in that the structure is repeated periodically in the direction of displacement and carries at least one measuring device (17) disposed at the centre of the air gap (16) and at an equal distance from the opposite main magnets (11, 11' - 12, 12' - 13, 13').

7. A structure according to any one of claims 1 to 6 characterised in that it is fixed with respect to a race (74, 104) and defines an annular air gap (90, 120) in which there is disposed at least one measuring probe (94, 122) fixed with respect to a support (92, 123) mounted on another race (82, 112).

## Patentansprüche

1. Magnetstruktur für einen linearen Verschiebefühler, bestehend aus zwei magnetischen Kreisen, die durch einen Spalt (6) getrennt sind und die jeweils aus einer Folge von Permamentmagneten (1, 2, 3, 4 - 1', 2', 3', 4') bestehen, die zusammengebaut und fest miteinander mittels Rückflußjochen verbunden sind, wobei eine Fläche dem Spalt (6) zugewandt ist, dadurch gekennzeichnet, daß die Magnetisierungsrichtungen der sich gegenüberliegenden Magnete (1, 1'-2, 2'-3, 3'-4, 4') und zusammengebauter Magnete (1-2, 2-3, 3-4 und 1'-2', 2'-3', 3'-4') antiparallel zueinander sind und daß die Länge eines jeden Magneten ungefähr zweimal größer als die Breite d des Spaltes ist.

2. Struktur nach Anspruch 1, dadurch gekennzeichnet, daß jeder Kreis aus Permamentmagneten (1, 2, 3 - 1', 2', 3') sich periodisch entlang der Verschieberichtung wiederholt und wenigstens eine Meßanordnung (7) aufweist, die in der Mitte des Spaltes im gleichen Abstand von den Magneten (1, 1'-2, 2'-3, 3') entlang der Koordinatenachse O_{y} angeordnet ist.

3. Struktur nach Anspruch 2, dadurch gekennzeichnet, daß die Breite eines seitlichen Magneten (1, 1'-3,3') im wesentlichen gleich der halben Breite eines der zusammengebauten Magnete (2, 2') ist.

4. Magnetstuktur für einen linearen Verschiebefühler bestehend aus zwei magnetischen Kreisen, die durch einen Spalt (16) getrennt ist und die jeweils aus einer Folge von ersten Permanentmagneten (11, 12, 13, 14 - 11', 12', 13', 14') mit gleichem Querschnitt bestehen, die fest durch zweite Magneten (20, 21, 22, 23 - 20', 21', 22', 23') zusammengebaut sind, deren Querschnitt identisch zu demjenigen der ersten Magneten ist, dadurch gekennzeichnet, daß:
- der Querschnitt der ersten Magnete ein gleichschenkliges Dreieck ist, dessen Grundlinie dem Spalt (16) zugewandt ist,
- die Magnetisierungsrichtungen der gegenüberliegenden ersten Magnete (11, 11' - 12, 12' - 13, 13' - 14, 14') und der ersten sich anschließenden Magnete (11, 12 - 12, 13, 14; 11', 12' - 12', 13' - 13', 14') antiparallel sind,
- die Polaritäten der sich paarweise gegenüberliegenden Magnete (11, 11' - 12, 12' - 13, 13' - 14, 14') identissch sind,
- die Magnetisierungsrichtung der zweiten Magnete (20, 21, 22, 23, 20', 21', 22', 23') parallel zur Grundlinies ihres Querschnitts ist und die gleiche Flußrichtung aufweist, wie die ersten Magnete
- die Länge (L) der Grundlinie eines jeglichen Magneten ungefähr zweimal größer als die Breite (d) des Spaltes ist.

5. Magnetstruktur nach Anspruch 4 mit periodischer Verteilung der ersten Magnete (11, 12 - 11, 12, 13; 11', 12' - 11', 12', 13') und der zweiten Magnete (20, 21, 22 - 21, 22; 20', 21', 22' - 21', 22'), dadurch gekennzeichnet, daß die Polarisationsrichtungen eines jeden ersten und zweiten Magneten um 90° in gleicher Richtung verdreht sind.

6. Struktur nach einem der Ansprüche 4 oder 5, dadurch gekennzeichnet, daß sich die Struktur periodisch entlang der Verschieberichtung wiederholt und wenigstens eine Meßanordnung (17) aufweist, die in der Mitte des Spaltes (16) und im gleichen Abstand von den sich gegenüberliegenden ersten Magneten (11, 11' - 12, 12' - 13, 13') angeordnet ist.

7. Struktur nach einem der Ansprüche 1 bis 6, dadurch gekennzeichnet, daß sie fest mit einem Ring (74, 104) verbunden ist und einen ringförmigen Spalt (90, 120) begrenzt, in dem wenigstens eine Meßsonde (94, 122) angeordnet ist, die fest mit einer Halterung (92, 123) verbunden ist, die an einem anderen Ring (82, 112) angeordnet ist.
